# EUROPÄISCHE PATENTSCHRIFT

(11) **EP 2 170 670 B1**
(45) Veröffentlichungstag und Bekanntmachung des Hinweises auf die Patenterteilung: **21.03.2012**
(21) Anmeldenummer: 08784617.6
(22) Anmeldetag: 04.07.2008
(51) Int. Cl.: B60W 40/06

(54) **VORRICHTUNG ZUM VORAUSERKENNEN VON SCHUBBETRIEBSPHASEN EINES FAHRZEUGS**
DEVICE FOR IDENTIFYING OVERRUN PHASES OF A VEHICLE IN ADVANCE
DISPOSITIF D'IDENTIFICATION ANTICIPEE DE PHASES DE FONCTIONNEMENT EN ROUE LIBRE D'UN VEHICULE

(30) Priorität: 16.07.2007 DE 102007032969
(43) Veröffentlichungstag der Anmeldung: 07.04.2010
(73) Patentinhaber: KNORR-BREMSE Systeme für Nutzfahrzeuge GmbH, 80809 München (DE)
(72) Erfinder: LEINUNG, Andreas, 81377 München (DE)
(74) Vertreter: Mattusch, Gundula
(86) Internationale Anmeldenummer: PCT/EP2008/005473
(87) Internationale Veröffentlichungsnummer: WO 2009/010196

(56) Entgegenhaltungen:
- EP-A- 0 829 389
- EP-A- 1 211 121
- EP-A- 1 777 135
- US-A- 5 132 906
- US-A- 5 832 400
- US-A- 5 995 895

## Beschreibung

Die Erfindung betrifft das Gebiet der Herstellung und der Betriebsweise von Fahrzeugen und Fahrzeugkomponenten. Insbesondere betrifft die Erfindung erdgebundene Fahrzeuge des täglichen Straßenverkehrs, insbesondere Kraftfahrzeuge wie beispielsweise Nutzfahrzeuge.

Fahrzeuge des täglichen Straßenverkehrs fahren je nach momentaner Geschwindigkeit, Fahrzeugbeschleunigung (positiv oder auch negativ, etwa bei einer Abbremsung) oder anderen äußeren Einflüssen wie fahrerseitigen Eingriffen häufig vorübergehend im Schubbetrieb.

Der Schubbetrieb meint hier den Schleppbetrieb des Motors durch die über den geschlossenen Antriebsstrang eingespeiste kinetische Energie des Fahrzeug. Das Fahrzeug, das im Zeitpunkt des Schubbetriebs über mehr kinetische Energie verfügt, als der Motor augenblicklich bereitstellt, schleppt den Motor d.h. will ihn beschleunigen.

In der Ebene ist ein so verstandener Schubbetrieb nur dann möglich, wenn der Fahrer durch Zurücknahme der Gaspedal-Stellung das Fahrzeug abbremst. Dieser Schubbetrieb kann im Gefälle je nach dessen Grad und nach der Fahrerreaktion am Gaspedal längere Zeit sowohl mit positiver und negativer Fahrzeugbeschleunigung als auch mit konstanter Fahrgeschwindigkeit auftreten.

Schubbetriebsphasen machen lediglich einen kleineren Anteil der gesamten Fahrzeit aus. Insbesondere ist bislang nicht vorhersehbar, wann im Fahrzeug ein Schubbetrieb auftreten wird, da das Verhalten des Fahrers hierauf wesentlichen Einfluß hat. Das Fahrverhalten des Fahrers ist jedoch nicht vorhersehbar, weshalb herkömmlich keine Möglichkeit besteht, etwaige Schubbetriebsphasen vorherzusehen, bevor sie tatsächlich eintreten. Die Ungewißheit hinsichtlich des zukünftigen bzw. bevorstehenden Fahrverhaltens des Fahrers und damit seines Fahrzeugs verhindert es, auftretende Schubbetriebsphasen noch effizienter technisch auszunutzen. Lediglich bei einer bereits eingetretenen Schubbetriebsphase, die noch andauert, können Fahrzeugkomponenten in veränderter Weise gesteuert werden. Jedoch auch hier besteht herkömmlich Ungewißheit über die Zeitdauer, während derer eine bereits eingetretene Schubbetriebsphase noch andauern wird, da neben der Fahrerreaktion auch die zukünftigen teils streckenbedingten Betriebszustände des Fahrzeugs unbekannt sind. Dies begrenzt die Möglichkeiten einer optimierten Steuerung von Fahrzeugkomponenten. Aufgrund der vielen nicht vorhersagbaren Einflüsse besteht noch nicht die Möglichkeit, die oben genannten Beschränkungen bei der Steuerung und des Betriebsweise von Fahrzeugkomponenten zu überwinden.

Das Dokument EP 1 777 735 A1 beschreibt ein Verfahren zur Anpassung von Fahrparametern von Fahrzeugen, bei welchem unter anderem Höhenunterschiede auf einer noch zu fahrenden Strecke berücksichtigt werden.

In dem Dokument EP 1 211 121 A2 wird eine Vorrichtung zum Steuern eines Fahrzeugs mit Hybridantrieb beschrieben. Das Aufladen eines elektrischen Akkumulators durch Energierückgewinnung wird basierend auf Höheninformationen bezüglich einer zu befahrenden Strecke gesteuert.

Das Dokument EP 0 829 389 A2 beschreibt eine Energieversorgungseinrichtung für ein Fahrzeug mit einem Generator und einem Akkumulator zum Speichern elektrischer Energie. Die Ansteuerung der Energieversorgungseinrichtung kann basierend auf gemessenen Höhendaten und Kartendaten erfolgen.

Es ist die Aufgabe der vorliegenden Erfindung, das Vorauserkennen von Schubbetriebsphasen in Fahrzeugen, insbesondere erdgebundenen Fahrzeugen wie beispielsweise Stra-Benfahrzeugen zu ermöglichen. Es soll insbesondere eine hierzu geeignete Vorrichtung bereitgestellt werden.

Diese Aufgabe wird durch eine Vorrichtung gemäß Anspruch 1 und eine Fahrzeugkomponente gemäß Anspruch 35 gelöst. Bevorzugte Ausführungsformen sind insbesondere in den Unteransprüchen aufgeführt und beansprucht.

Die vorliegende Erfindung ermöglicht es, erstmals die kartographischen Höhenpositionen einer Fahrtstrecke, d.h. deren lokale Höhenkoordinaten (in Richtung senkrecht zur Erdoberfläche) technisch zur Voraussage des Eintretens von Schubbetriebsphasen eines beweglichen Fahrzeugs auszunutzen. Bislang werden in beweglichen Fahrzeugen Navigationssysteme lediglich dazu eingesetzt, dem Fahrer eine Orientierung im zweidimensionalen Straßennetz zu geben und zur Routenplanung eine kürzeste oder schellste Fahrtroute zu errechnen. Hierfür spielen Höhenkoordinaten keine Rolle, da das Fahrzeug an die jeweilige Straße gebunden ist und ihrem Höhenverlauf zwangsläufig folgen muß; lediglich die horizontalen Koordinaten parallel zur Erdoberfläche (in positive und negative y/x-Richtung bzw. in Nord/Süd/Ost/West-Richtung) sind für die momentane Position des Fahrzeugs im Straßennetz und für die daraus resultierende kürzeste Fahrtroute (deren Verlauf dementsprechend auch nur durch zweidimensional dargestellt wird) von Bedeutung. Herkömmlich erfolgt auch keine technische Ausnutzung von Höhenkoordinaten zur Steuerung einer Komponente eines Fahrzeugs, sondern ausschließlich zur Wegfindung zu einem Zielort.

Die Erfindung ermöglicht hingegen erstmals eine Optimierung des Betriebsablaufs bzw. der Steuerungsvorgänge des Fahrzeugs, insbesondere einer Komponente des Fahrzeugs, in Abhängigkeit von Gefällestrecken einer dem Fahrzeug vorausliegenden Fahrtstrecke. Herkömmlich werden nur die Parameter des Fahrzeugs selbst, die die jeweiligen Betriebszustände der Fahrzeugkomponenten angeben, als Einflußgrößen zu deren Steuerung und Optimierung herangezogen, nicht jedoch die kartographischen Daten einer befahrbaren Fahrtstrecke. Die Erfindung ermöglicht die Einbeziehung vertikaler Positionskoordinaten der Fahrtstrecke und/oder des Fahrzeugs, um das zukünftige Fahrverhalten des Fahrzeugs vorauszuberechnen und insbesondere eine Prognose über voraussichtlich auftretende Schubbetriebsphasen zu berechnen. Auf deren Grundlage kann die Steuerung einer oder mehrerer Fahrzeugkomponenten verbessert werden. So läßt sich etwa im voraus erkennen, ob und wann eine länger andauernde Schubbetriebsphase bevorsteht, während derer ein Steuervorgang, Schaltvorgang oder sonstiger Arbeitsschritt einer Fahrzeugkomponente ohne Energieverbrauch oder mit geringerem Energieverbrauch durchgeführt werden kann. Während herkömmlich das bevorstehende Fahrverhalten des Fahrers als unvorhersehbar hingenommen wird, ermöglicht die vorliegende Erfindung einen qualitativen Technologiesprung hinsichtlich der Steuerung und Betriebsweise von Fahrzeugkomponenten unter Berücksichtigung von Einflußgrößen, die außerhalb des Fahrzeugs selbst liegen. Hiervon können beliebige Fahrzeugkomponenten profitieren, insbesondere Komponenten von straßengebundenen Fahrzeugen, etwa von Nutzfahrzeugen.

Insbesondere wird ein Vorauserkennen von Schubbetrieben bzw. Schubbetriebsphasen möglich sowie deren technische Ausnutzung im Fahrzeug. Insbesondere solche Phasen, in denen der Fahrzeugmotor des fahrenden Fahrzeugs über seine Verbindung mit den Fahrzeugrädern ein zusätzliches Drehmoment erhält, das auf eine Erhöhung der Motordrehzahl hinwirkt, lassen sich zur energiesparenden oder e-nergiefreien Durchführung eines Steuervorgangs, Schaltvorgangs oder sonstigen Arbeitsschrittes einer beliebigen Fahrzeugkomponente ausnutzen.

Die Erfindung wird nachstehen mit Bezug auf die Figuren beschrieben. Es zeigen:
Figur 1 eine schematische Darstellung eines Fahrzeugs mit der erfindungsgemäßen Vorrichtung,
Figur 2 eine schematische Darstellung einer möglichen Ausführungsform der erfindungsgemäßen Vorrichtung,
Figur 3 die Steuerung einer beliebigen Fahrzeugkomponente des Fahrzeugs mithilfe der erfindungsgemäßen Vorrichtung und
die Figuren 4A bis 4C mehrere Ausführungsarten hinsichtlich der zeitlichen Vorausberechnung von Schubbetriebsphasen und
Figur 5 schmatisch einige Komponenten eines Fahrzeugs mit der erfingsgemäßen Vorrichtung gemäß einer möglichen Ausführungsform.

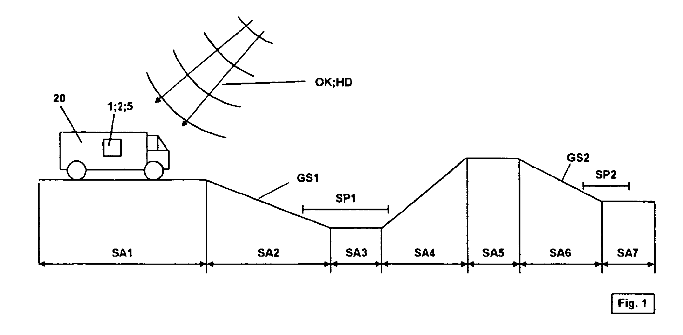

Figur 1 zeigt schematisch ein mit der erfindungsgemäßen Vorrichtung 1 ausgestattetes Fahrzeug 20 auf einer Fahrtstrecke F. Die Vorrichtung 1 ist so beschaffen, daß sie Höhenpositionsdaten HD und vorzugsweise auch momentane Ortskoordinaten OK; x, y, L des fahrenden Fahrzeugs empfangen und zu einer Prognose über das Auftreten und/oder die zeitliche Dauer von Schubbetriebsphasen in der Zukunft verarbeiten kann. Herkömmlich werden allenfalls die geographischen Ortskoordinaten OK, die die momentane Position x; y des Fahrzeugs angeben, zur Orientierung im Strapenverkehr ausgewertet, zumal das Fahrzeug zwangsläufig dem Höhenverlauf des Straße folgen muß und sich somit aus den Höhenpositionsdaten keine Einflußmöglichkeiten für die auswählbaren Fahrtrouten des Stra-ßennetzes ergeben.

Errfindungsgemäß jedoch werden vor allem die Höhenpositionsdaten zu einer Prognose für herkömmlich noch nicht vorauserkennbare Schubbetriebsphasen verarbeitet. Figur 1 zeigt schematisch einige Gefällestrecken GS1, GS2 der Fahrtstrecke, die dem Fahrzeug vorausliegen. Erfindungsgemäß erfolgt eine Berechnung einer Prognose zukünftige und/oder momentaner, noch andauernder Schubbetriebsphasen. Diese werden in der Regel räumlich und zeitlich nur teilweise mit den Gefällestrecken zusammenfallen, da meist noch weitere Fahrzeugparameter, bzw. deren momentane Werte während der Fahrt Einfluß haben auf die Betriebszustände des Fahrzeugs und seiner Fahrzeugkomponenten.

In Figur 1 ist die Fahrtstrecke vereinfacherd in mehrere Streckenabschnitte SAn unterteilt. Ferner sind in Figur 1 beispielhaft zwei zukünftige Schubbetriebsphasen SP1, SP2 dargestellt, wobei die erste Schubbetriebsphase SP1 sich räumlich sogar mit einem Streckenabschnitt SA 4, der in Fahrtrichtung eine Steigung, die einem Schubbetrieb eher entgegenwirkt, überlappt. Die erste Schubbetriebsphase überlappt zugleich mit Streckenabschnitten, die in Fahrtrichtung mit einer Steigung (für SA4), einer Gefällestrecke (für SA2) und mit einem horizontalen Streckenverlauf ohne Gefälle oder Höhenanstieg (für SA3) zusammenfallen. Somit setzt die von der erfindugnsgemäßen Vorrichtung errechnete Prognose in der Regel die Gefällestreckne nicht lediglich den Schubbetriebsphasen gleich, sondern berücksichtigt bei der Berechnung und Vorhersage der Schubbetriebsphasen eine komplexere Abhängigkeit zwischen beiden, wobei meist auoh weitere Fahrzeugparameter in die Berechnung mit eingehen.

Mithilfe der erfindungsgemäßen Vorrichtung 1, die die Verarbeitungseinheit 2 und vorzugsweise auch eine (separate oder in die Vorrichtung oder deren Verarbeitungseinheit oder in eine andere Komponente der Vorrichtung integrierte) Steuereinheit 5 aufweist, läßt sich eine beliebige Fahrzeugkomponente FK des Fahrzeugs 20 steuern.

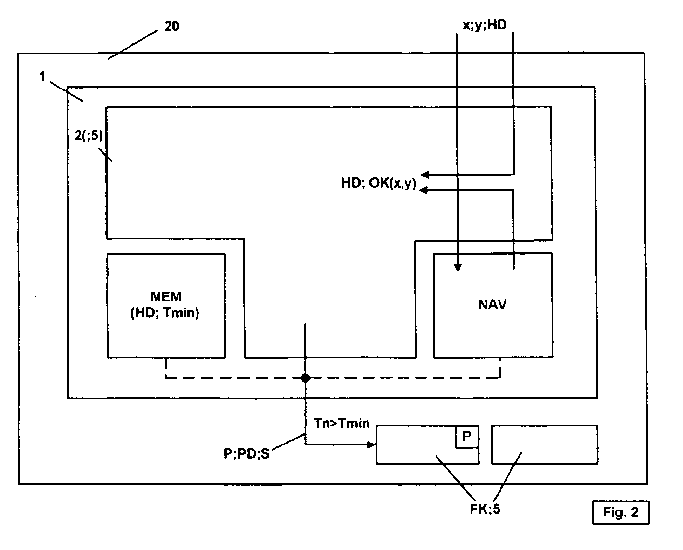

Figur 2 zeigt schematisch eine Ausführungsform der erfindungsgemäßen Vorrichtung 1 des Fahrzeugs 20 oder für ein Fahrzeug 20 (d.h. vor dem Einbau in das Fahrzeug). Die Vorrichtung 1 umfaßt eine Verarbeitungseinheit 2, die Höhenpositionsdaten HD einer zu befahrenden Fahrtstrecke F verarbeitet. Diese Verarbeitung dient zur Berechnung einer Prognose P über vor allem zukünftige Schubbetriebsphasen SPn, wobei die Prognose in Form von Prognosedaten PD und/oder von Steuersignalen S ausgegeben wird. Die Prognosedaten PD und/oder Steuersignale S können etwa von der Verarbeitungseinheit 2 an mindestens eine zu steuernde Fahrzeugkomponente FK übermittelt werden. Dort oder auch in der erfindungsgemäßen Vorrichtung selbst können ferner Fahrzeugparameter p gespeichert sein, die ebenfalls bei der Steuerung berücksichtigt werden.

Die Vorrichtung 1 kann ferner ein Navigationssystem NAV umfassen, das zum Emfangen der Höhenpositionsdaten HD und vorzugsweise auch der Ortskoordinaten OK; x, y; L des (insbesondere schon fahrenden) Fahrzeugs 20 dient. Auf diese Weise kann vor oder während der Fahrt eine Vorausberechnung der iner Prognose erfolgen, welche voraussichtlich auftretende Schubbetriebsphasen im Vorhinein erkennt und in die Steuerung von Fahrzeugkomponenten FK im Vorhinein mit einbezieht.

Die Vorrichtung 1 kann ferner eine Speichereinrichtung MEM umfassen, die zur Speicherung etwa der Höhenpositionsdaten HD oder von Fahrzeugparametern p dient. Ferner können auch die momentanen Ortskoordinaten OK des fahrenden Fahrzeugs in der Speichereinrichtung MEM während der Fahrt gespeichert sein. Es kann auch ein Grenzwert Tmin für die minimale zeitliche Dauer von Schubbetriebsphasen, oberhalb derer erst eine technische Ausnutzung der jeweiligen Schubbetriebsphase erfolgen soll, in der Speichereinrichtung MEM gespeichert sein. Die Einheiten MEM und/oder NAV können ebenso in die Verarbeitungseinheit 2 integriert sein oder als separate Einheiten außerhalb der Vorrichtung 1 ausgebildet sein.

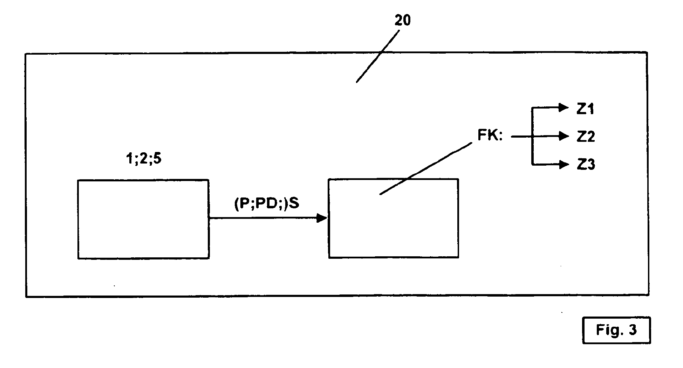

Figur 3 zeigt schematisch die mithilfe der erfindungsgemäßen Vorrichtung 1 ermöglichte, unter Berücksichtigung von Höhenpositionsdaten erfolgende Steuerung einer beliebigen Fahrzeugkomponente FK des Fahrzeugs 20. Infolge der Prognose werden Steuersignale S an die Fahrzeugkomponente FK oder an deren Steuereinrichtung übermittelt, um die Fahrzeugkomponente unter Berücksichtigung prognostizierter Schubbetriebsphasen zu steuern. Herkömmlich bleiben zukünftige Schubbetriebsphasen (oder in der Zukunft liegende Teile momentan noch andauernder Schubbetriebsphase) bei der Steuerung unberücksichtigt. Infolge der erfindungsgemäß optimierten Steuerung kann beispielsweise die Entscheidung, ob und wann eine Fahrzeugkomponente wahlweise in einem ersten Betriebszustand Z1 oder in einem zweiten Zustand Z2 oder einem sonstigen weiteren Zustand Zn betrieben wird, unter Berücksichtigung zukünftiger Schubbetriebssphasen getroffen werden und so die Steuerung der Fahrzeugkomponenten verbessert werden. So kann beispielsweise dann, wenn die zeitlich Dauer einer zukünftigen Schubbetriebsphase eine vorgesehene Mindestdauer Tmin voraussihctlich überschreiten wird, die Fahrzeugkomponente während dieser Schubbetriebsphase oder zeitweise während dieser Schubbetriebsphase im Zustand Z1 betrieben werden und ansonsten in anderen Zuständen betrieben werden. Ferner kann die Fahrzeugkomponente - wie in den Unteransprüchen im einzelnen beansprucht - auf verschiedene Art und Weise gesteuert sein, insbesonder hinsichtlich Art und Funktion der jeweiligen Zustände und der Entscheidung, welcher Zustand wann angenommen werden soll. Die Fahrzeugkomponente kann beispielsweise ein Druckluftsystem, ein Bremssystem, eine Lichtmaschine oder eine beliebige sonstige Komponente eines Fahrzeugs, insbesondere eines Nutzfahrzeugs sein.

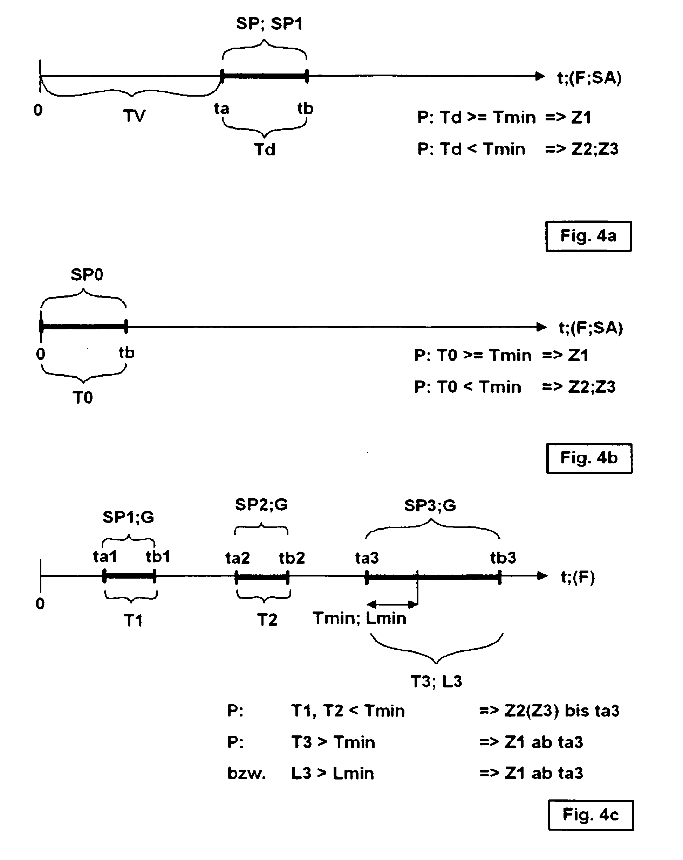

Die Figuren 4A bis zeigen 4C exemplarisch einige (auch miteinander kombinierbare) Ausführungsarten der Erfindung hinsichtlich der zeitlichen Vorausberechnung von Schubbetriebsphasen. Dargestellt ist jeweils ein Zeitstrahl, beginnend mit dem gegenwärtigen Zeitpunkt t=0 und für einen zukünftigen Zeitraum t>0 dargestellt. Dieser Zeitraum kann einen Zeitraum darstellen, der für das Befahren einer zu befahrenden bzw. vorgesehenen Fahrtstrecke F oder eines vorausliegenden Streckenabschnitts SA vorgesehen ist, und entspricht gleichermaßen der Wegkoordinate (etwa dem voraussichtlichen km-Stand) des Fahrzeugs entlang der Fahrtstrecke F oder des jeweils nächsten vorausliegendene Streckenabschnitts SA.

Gemäß Figur 4A wird hierfür bzw. für einen bald bevorstehenden Zeitraum (in der Größenordnung etwa von einigen Sekunden bis zu mehreren Minuten) eine Schubbetriebsphase SP bzw. eine erste, bevorstehende Schubbetriebsphase SP1 vorausberechnet. Hierbei kann etwa mithilfe der Höhenkoordinaten der Fahrtstrecke eine Gefällestrecke ermittelt werden. Der zeitliche bwz. räumliche Beginn der Schubbetriebsphase muß jedoch nicht mit dem Beginn und Ende der Gefällestrecke übereinstimmen, sondern kann etwa aufgrund von anfänglichen Parameterwerten des Fahrzeugs bei Erreichen der Gefällestrecke und deren weitere Auswirkung von der Gefällestrecke selbst abweichen. In Figur 4A wird nach einer Zeitdauer TV das Eintreten der Schubbetriebsphase SP bzw. SP1 vorausberechnet, mit voraussichtlichen Anfangs- und Endzeitpunkten ta und tb und einer Zeitdauer Td. Diese Prognose P ermöglicht eine technische Ausnutzung der Schubbetriebsphase. Zusätzlich kann überprüft werden, ob die voraussichtliche Dauer Td der Schubbetriebsphase eine vorgegebene Mindestdauer Tmin überschreitet. Ferner kann die Steuerung (einer beliebigen Fahrzeugkomponente) in der Weise erfolgen, daß nur unter der Bedingung, daß die Dauer Td der Schubbetriebsphase größer ist als die Mindestdauer Tmin, die Schubbetriebsphase auch tatsächlich technisch ausgenutzt wird (anstatt in jedem Fall, unabhängig von ihrer Dauer Td).

Die Ausnutzung einer Schubbetriebsphase kann etwa dadurch erfolgen, daß eine Fahrzeugkomponente oder eine beliebige sonstige Vorrichtung am oder im Fahrzeug von einen ersten Zustand Z1, der beispielsweise zeitlich außerhalb von Schubbetriebsphasen vorliegt, in einen zweiten Zustand Z2 oder in weitere Zustände Z3, ... geschaltet wird. Dieses Schalten nach Z2 oder Z3, ... kann auch lediglich eines Teils der Dauer Td der Schubbetriebsphase SP erfolgen bzw. vorgesehen sein (statt durchgängig während der gesamten Zeitdauer Td). Insbesondere kann ein technischer Vorgang (auch relativ kurzer Zeitdauer) zeitlich so synchronisiert werden, daß er innerhalb der Zeitspanne zwischen ta und tb durchgeführt wird.

Ebenso können schon weitere nachfolgende Schubbetriebsphasen vorausberechnet werden; in Figur 4A ist lediglich der Einfachheit halber nur eine einzige nächste, vorausberechnete Schubbetriebsphase dargestellt.

Wie in Figur 4B dargestellt, kann ebenso für eine bereits begonnene Schubbetriebsphase, die momentan, d.h. zum Zeitpunkt t=0, noch andauert, eine Prognose für die noch verbleibende Dauer T0 dieser Schubbetriebsphase bzw. deren Endzeitpunkt tb errechnet werden. Eine technische Ausnutzung der Schubbetriebsphase (etwa durch Schalten einer Komponente in einen anderen Zustand als Z1) kann beispielsweise dann oder bevorzugt dann veranlaßt werden, wenn die prognostizierte weitere Dauer T0 eine Mindestdauer Tmin voraussichtlich überschreiten wird. Ferner kann gemäß den Figuren 4A und 4B auch eine kombinierte Prognose für gegenwärtig andauernde und in der Zukunft liegende Schubbetriebsphasen erstellt werden.

Gemäß Figur 4C kann ferner für momentane und/oder zukünftige Schubbetriebsphasen SP1, SP2, deren zeitliche Dauer T1, T2 jeweils voraussichtlich kleiner ist als eine vordefinierte zeitliche Mindestdauer Tmin und die einer errechneten frühesten zukünftigen Schubbetriebsphase SP3 größerer Dauer T3 als Tmin vorangehen, die technische Ausnutzung der vorangehenden Schubbetriebsphasen SP1, SP2 unterbunden werden. Hierbei wird die durch die Prognose gewonnene Erkenntnis ausgenutzt, daß eine zeitlich noch länger andauernde Schubbetriebsphase SP3 zu erwarten ist, die eine noch effizientere oder stärker energiesparende technische Ausnutzung als die vorangehenden Schubbetriebsphasen SP1, SP2 kürzerer Dauer ermöglicht. Die technische Ausnutzung einer jeweiligen Schubbetriebsphase kann etwa in Form einer Energiegewinnung und/oder Energiespeicherung in oder für eine beliebige Fahrzeugkomponente erfolgen. Die zeitliche Dauer einer Schubbetriebsphase kann auch in Form eines voraussichtlich im Schubbetrieb zu passierenden Streckenabschnitts einer Fahrtstrecke ausgedrückt werden, beispielsweise für die Schubbetriebsphase SP3 etwa in Form einer Streckenlänge Lmin (die für diese Schubbetriebsphase SP3 größer ist als eine vorgegebene Mindeststreckenlänge Lmin). Die technische Ausnutzung kann wiederum beispielsweise in Form eines Schaltens einer Komponente in einen anderen Zustand, beispielsweise (umgekehrt wie anhand der Figuren 4A und 4B erläutert) nach Z1 (statt sonst Z2 oder Z3) erfolgen oder umgekehrt.

Selbstverständlich kann (und wird in der Regel) die Veranlassung einer technischen Ausnutzung von Schubbetriebsphase unter Berücksichtigung weiterer Fahrzeug- oder Komponenten-Parameter erfolgen. Die zeitliche Abfolge und Dauer aller vorausberechneten Schubbetriebsphasen und auch derjenigen Schubbetriebsphasen, die nicht nur vorauserkannt, sondern auch tatsächlich technisch ausgenutzt werden, stellt somit im allgemeinen nicht lediglich ein Abbild des Höhenprofils der befahrenen oder zu befahrenden Fahrtstrecke dar, sondern ergibt sich aus einer komplexeren Abhängigkeit von einer Mehrzahl von Einflußgrößen, wobei das Höhenprofil der Fahrtstrecke eine dieser Einflußgrößen darstellt.

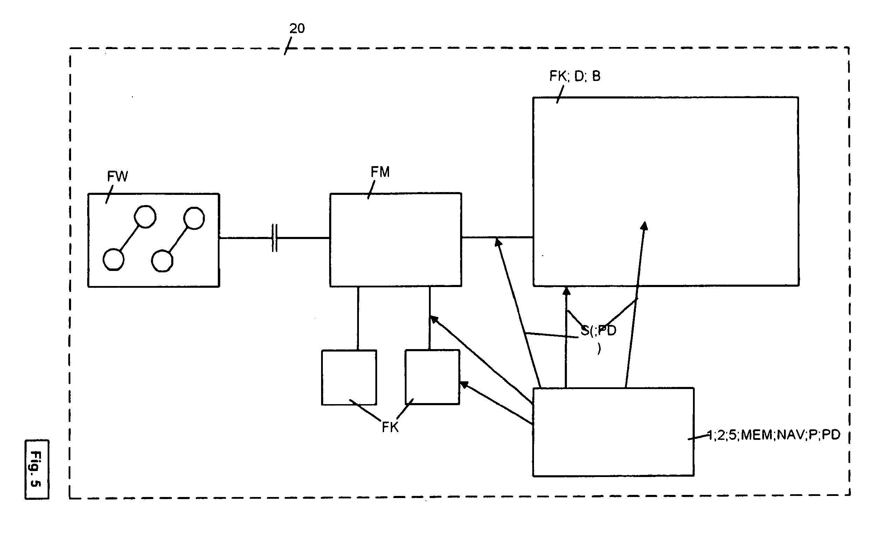

Figur 5 zeigt schmatisch einige Komponenten eines Fahrzeugs mit der erfingsgemäßen Steuereinrichtung 1 bzw. Vorrichtung 1 gemäß einer möglichen Ausführungsform. Die unter Berücksichtigung von Schubbetriebsphasen gesteuerte Komponente kann insbesondere ein Druckluftsystem D, etwa ein Bremssystem B sein. Es können zusätzlich auch weitere Fahrzueugkomponenten FK durch die erfindungsgemäße Steuereinrichtung 1 gesteuert sein. Die Steuereinheit 1 ist in Figur 5 außerhalb der Fahrzeugkomponenten FK dargestellt, kann jedoch ebenso vollständig oder teilweise in diese Komponenten FK integriert sein. Sie kann auch als eigenes Zulieferteil ausgebildet sein, durch das das Fahrzeug oder eine seiner Komponenten (etwa das Druckluftsystem oder ein Teil des Druckluftsystems) nachträglich aufrüstbar ist. Insofern gibt in Figur 5 die Position der Steuereinrichtung 1 lediglich eine von vielen möglichen Ausführungsformen wieder. Die Steuereinrichtung 1 kann die oben beschriebenen Einheiten 2, 5, MEM und/oder NAV umfassen; einzelne oder einige dieser Bestandteile können jedoch auch in der verbessert anzusteuernden Fahrzeugkomponente FK oder in deren Umgebung angeordnet sein. Es lassen sich je nach Ausführungsform nur eine einzige Komponente FK oder auch mehrere Komponenten FK mithilfe der Steuereinrichtung 1 ansteuern, wie in Figur 5 anhand der Pfeile angedeutet. Die jeweilige Komponenten FK, insbesondere das Druckluftsystem D oder das Bemssystem B, kann intern auf beliebige Art und Weise aufgebaut sein. Jede Komponente kann direkt oder indirekt mit einem Fahrzeugmotor FM verbunden sein. Der Fahrzeugmotor FM kann über eine Kupplung mit dem Fahrwerk FW, insbesondere mit den Antriebsrädern verbunden sein.

### Bezugszeichenliste:

- 1: Vorrichtung
- 2: Verarbeitungseinheit
- 5: Steuereinheit
- 20: Fahrzeug
- B: Bremssystem
- D: Druckluftsystem
- F: Fahrtstrecke
- FK: Fahrzeugkomponente
- FW: Fahrwerk
- G: Gefälle
- GS: Gefällestrecke
- HD: Höhenpositionsdaten
- L: Länge
- LM: Lichtmaschine
- Lmin: Mindestlänge
- MEM: Speichereinheit
- NAV: Navigationssystem
- OK: Ortskoordinaten
- P: Progose
- PD: Prognosedaten
- p: Fahrzeugparameter
- R: Fahrtrichtung
- S: Steuersignal
- SA: Streckenabschnitt
- SP;: SPn Schubbetriebsphase
- SP0: momentane Schubbetriebsphase
- ta: Zeitpunkt des Beginns einer Schubbetriebsphase
- tb: Zeitpunkt der Beendigung einer Schubbetriebsphase
- Td; Tmin: Tn zeitliche Dauer einer Schubbetriebsphase Mindestdauer
- TV: zeitlicher Abstand zu Schubbetriebsphase
- T0 phase: verbleibende Dauer einer momentanen Schubbetriebs-
- x; y: geographische Position
- z: vertikale Position
- Z1: erster Zustand
- Z2: zweiter Zustand
- Zn: weiterer Zustand

## Patentansprüche

1. Vorrichtung (1) zum Vorauserkennen von Schubbetriebsphasen (SP) eines Fahrzeugs (20), wobei die Vorrichtung (1) zumindest eine Verarbeitungseinheit (2) aufweist, die Höhenpositionsdaten (HD) einer von dem Fahrzeug (20) befahrenen oder noch zu befahrenden Fahrtstrecke (F) verarbeitet und unter Berücksichtigung der Höhenpositionsdaten (HD) eine Prognose (P) über das voraussichtliche Auftreten zukünftiger Schubbetriebsphasen (SP) des Fahrzeugs (20) errechnet, **dadurch gekennzeichnet, daß** die Verarbeitungseinheit (2) die Zeitdauer (Td) voraussichtlich auftretender Schubbetriebsphasen (SP) mit einer vorgegebenen Mindestdauer (Tmin) vergleicht und eine Prognose (P) errechnet, die eine gezielte Ausnutzung ausschießlich solcher bereits begonnener oder bevorstehender Schubbetriebsphasen (SP; PSn) veranlaßt, deren errechnete Zeitdauer (Td) größer ist als die vorgegebene Mindestdauer (Tmin).

2. Vorrichtung nach Anspruch 1, **dadurch gekennzeichnet, daß** die Verarbeitungseinheit (2) eine Prognose (P) errechnet, die das Auftreten ermittelter zukünftiger Schubbetriebsphasen (SP) jeweils entlang eines vorausliegenden Streckenabschnitts (SA) der Fahrtstrecke (F) anzeigt.

3. Vorrichtung nach Anspruch 1 oder 2, **dadurch gekennzeichnet, daß** die Verarbeitungseinheit (2) die Prognose (P) jeweils für einen Streckenabschnitt (SA) vorgegebener Länge (L), der dem Fahrzeug (20) während der Fahrt entlang der Fahrtstrecke (F) jeweils unmittelbar vorausliegt, vorausberechnet.

4. Vorrichtung nach einem der Ansprüche 1 bis 3, **dadurch gekennzeichnet, daß** die Verarbeitungseinheit (2) eine Prognose (P) errechnet, die angibt, ob und/oder wo auf einer vorausliegenden Fahrtstrecke (F) oder auf einem vorausliegenden Streckenabschnitt (SA) der Fahrtstrecke Schubbetriebsphasen (SP; SPn) auftreten werden oder nicht.

5. Vorrichtung nach einem.der Ansprüche 1 bis 4, **dadurch gekennzeichnet, daß** die errechnete Prognose (P) Angaben (A) zum Zeitpunkt des Beginns (ta), zum Zeitpunkt der Beendigung (tb) und/oder zur zeitlichen Dauer (Td) einer oder mehrerer voraussichtlich bevorstehender Schubbetriebsphasen (SP; SPn) enthält.

6. Vorrichtung nach einem der Ansprüche 1 bis 5, **dadurch gekennzeichnet, daß** die Verarbeitungseinheit (2) aus den Höhenpositionsdaten (HD) und aus einer Fahrtrichtung (R) des Fahrzeugs (20) entlang der Fahrtstrecke (F) errechnet, wo auf der Fahrtstrecke (F) oder auf einem unmittelbar vorausliegenden Streckenabschnitt (SA) jeweils ein Gefälle (G) in Fahrtrichtung (R) auftreten wird.

7. Vorrichtung nach einem der Ansprüche 1 bis 6, **dadurch gekennzeichnet, daß** die Vorrichtung (1) als vorgegebene Mindestdauer (Tmin) für technisch auszunutzende Schubbetriebsphasen (SP) einen festen oder von Fahrzeugparametern (p) abhängigen Grenzwert in einer Speichereinheit (MEM) speichert.

8. Vorrichtung nach einem der Ansprüche 1 bis 7, **dadurch gekennzeichnet, daß** die Verarbeitungseinheit (2) die Länge (L) vorausliegender Gefällestrecken (GS) mit einer vorgegebenen Mindestlänge (Lmin) vergleicht und Prognosedaten (PD) ausgibt, die eine gezielte Ausnutzung von Schubbetriebsphasen (SP; PSn) auf lediglich solchen Gefällestrecken (GS) ermöglicht, deren Länge (L) die vorgegebene Mindestlänge (Lmin) überschreitet.

9. Vorrichtung nach einem der Ansprüche 1 bis 8, **dadurch gekennzeichnet, daß** die Verarbeitungseinheit (2) jeweils für eine momentane Schubbetriebsphase (SP0) eine Prognose (P) über die voraussichtlich verbleibende zeitliche Dauer (T0) dieser Schubbetriebsphase (SP0) errechnet.

10. Vorrichtung nach Anspruch 9, **dadurch gekennzeichnet, daß** die Verarbeitungseinheit (2) jeweils für eine momentane Schubbetriebsphase (SP0) ein Steuersignal (S) erzeugt, das in Abhängigkeit von der voraussichtlich verbleibenden zeitlichen Dauer (T0) dieser Schubbetriebsphase (SP0) festlegt, ob eine technische Ausnutzung dieser Schubbetriebsphase (SP0) in mindestens einer Fahrzeugkomponente (FK) veranlaßt wird oder nicht.

11. Vorrichtung nach Anspruch 10, **dadurch gekennzeichnet, daß** die Verarbeitungseinheit (2) jeweils für eine bereits eingetretene, momentane Schubbetriebsphase (SP0) ein Steuersignal (S) erzeugt, das dann, wenn die voraussichtlich verbleibende zeitliche Dauer (T0) der momentanen Schubbetriebsphase (SP0) einen vordefinierten Grenzwert (Tmin) überschreitet, eine technische Ausnutzung dieser Schubbetriebsphase (SP0) in mindestens einer Fahrzeugkomponente (FK) veranlaßt.

12. Vorrichtung nach einem der Ansprüche 1 bis 11, **dadurch gekennzeichnet, daß** die Verarbeitungseinheit (2) jeweils für eine und/oder mehrere zukünftige Schubbetriebsphasen (SPn) eine Prognose (P) über die voraus sichtliche zeitliche Dauer (Tn) dieser Schubbetriebsphasen (SPn) errechnet.

13. Vorrichtung nach einem der Ansprüche 1 bis 12, **dadurch gekennzeichnet, daß** die Verarbeitungseinheit (2) jeweils für eine oder mehrere zukünftige Schubbetriebsphasen (SPn) ein Steuersignal (S) erzeugt, das in Abhängigkeit von der voraussichtlichen zeitlichen Dauer (Tn) dieser Schubbetriebsphasen (SPn) jeweils festlegt, ob eine technische Ausnutzung der jeweiligen Schubbetriebsphase (SPn) in mindestens einer Fahrzeugkomponente (FK) veranlaßt wird oder nicht.

14. Vorrichtung nach Anspruch 13, **dadurch gekennzeichnet, daß** die Verarbeitungseinheit (2) jeweils für vorauserkannte zukünftige Schubbetriebsphasen (SPn) ein Steuersignal (S) erzeugt, das dann, wenn die voraussichtliche zeitliche Dauer (Tn) der jeweiligen Schubbetriebsphase (SPn) einen vordefinierten Grenzwert (Tmin) überschreitet, eine technische Ausnutzung dieser Schubbetriebsphase in der mindestens einen Fahrzeugkomponente (FK) veranlasst.

15. Vorrichtung nach einem der Ansprüche 1 bis 14, **dadurch gekennzeichnet, daß** die Verarbeitungseinheit (2) einen zeitlichen Abstand (TV) bis zum Beginn einer frühesten zukünftigen Schubbetriebsphase (SPn), deren Dauer (Tn) voraussichtlich eine vordefinierte Mindestdauer (Tmin) überschreiten wird, errechnet.

16. Vorrichtung nach Anspruch 15, **dadurch gekennzeichnet daß** die Verarbeitungseinheit (2) für momentane und/oder zukünftige Schubbetriebsphasen (SP), deren zeitliche Dauer jeweils voraussichtlich kleiner ist als die vordefinierte zeitliche Mindestdauer (Tmin) und die der errechneten frühesten zukünftigen Schubbetriebsphase (SP) größerer Dauer als der vordefinierten Mindestdauer (Tmin) vorangehen, eine technische Ausnutzung dieser vorangehenden Schubbetriebsphasen für Fahrzeügkomponenten unterbindet.

17. Vorrichtung nach einem der Ansprüche 1 bis 16, **dadurch gekennzeichnet, daß** die Vorrichtung (1) mit Hilfe der Verarbeitungseinheit (2) den Betrieb mindestens einer Fahrzeugkomponente (FK) steuert.

18. Vorrichtung nach einem der Ansprüche 1 bis 17, **dadurch gekennzeichnet, daß** die Verarbeitungseinheit (2) zur Vorausberechnung von Schubbetriebsphasen (SP) die Prognose (P) über das voraussichtliche Auftreten zukünftiger Schubbetriebsphasen (SP) des Fahrzeugs ferner in Abhängigkeit von Ortskoordinaten (OK), die eine geographische Position (x, y; L) des Fahrzeugs (20) entlang der Fahrtstrecke (F) angeben, errechnet.

19. Vorrichtung nach einem der Ansprüche 1 bis 18, **dadurch gekennzeichnet, daß** die Verarbeitungseinheit (2) zur Vorausberechnung von Schubbetriebsphasen (SP) weiter hin aktuelle Fahrzeugparameter (p) verarbeitet, wobei die aktuellen Fahrzeugparameter (P) zumindest ein Element aus Höhenpositionsdaten (HD) und/oder Ortskoordinaten (OK) des Fahrzeugs, der Fahrzeuggeschwindigkeit, Radgeschwindigkeiten und/oder Gierraten, einer Fahrzeugbeschleunigung, einem Druckluftniveaus einer Bremsanlage, einem Feuchtigkeitsniveau einer Druckluftbehälters oder einer Druckluftaufbereitungspatrone, einer Motordrehzahl, dem Betrag und/oder dem Vorzeichen eines Motordrehmoments, Kupplungs- und/oder Gangdaten, Retarderdaten des Fahrzeugs und einem Abstand zu einem vorausfahrenden anderen Fahrzeug umfassen.

20. Vorrichtung nach einem der Ansprüche 1 bis 19, **dadurch gekennzeichnet, daß** die durch die Verarbeitungseinheit (2) verarbeiteten Ortskoordinaten (OK) jeweils die momentane Position des fahrenden Fahrzeugs (20) entlang der Fahrtstrecke (F) angeben.

21. Vorrichtung nach Anspruch 20, **dadurch gekennzeichnet, daß** die Vorrichtung (1) weiterhin eine Navigationseinrichtung (NAV) umfaßt, die die Ortskoordinaten (OK), die jeweils eine momentane Position des Fahrzeugs (20) entlang der Fahrtstrecke (20) angeben, empfängt und an die Verarbeitungseinheit (2) weiterleitet.

22. Vorrichtung nach einem der Ansprüche 1 bis 21, **dadurch gekennzeichnet, daß** die Vorrichtung (1), deren Navigationseinrichtung (NAV) oder deren Verarbeitungsein heit (2) eine Speichereinheit (MEM) aufweist, in der die Höhenpositionsdaten (HD) der Fahrtstrecke (F) gespeichert sind.

23. Vorrichtung nach einem der Ansprüche 1 bis 22, **dadurch gekennzeichnet, daß** die Navigationseinrichtung (NAV) außer den Ortskoordinaten (OK) des Fahrzeugs (20) auch die Höhenpositionsdaten (HD) der Fahrtstrecke (F) empfängt und an die Verarbeitungseinheit (2) weiterleitet.

24. Vorrichtung nach einem der Ansprüche 1 bis 23, **dadurch gekennzeichnet, daß** die Höhenpositionsdaten (HD) vertikale Positionskoordinaten (z) von Streckenpunkten oder Streckenabschnitten der Fahrtstrecke (F) sind.

25. Vorrichtung nach einem der Ansprüche 1 bis 24, **dadurch gekennzeichnet, daß** die Navigationseinrichtung (NAV) der Vorrichtung (1) außer den Ortskoordinaten (OK; x, y, L) des Fahrzeugs auch Höhenpositionsdaten (HD), die eine momentane Höhenposition (z) des Fahrzeugs oder von momentan von dem Fahrzeug (20) befahrenen Streckenpunkten oder Streckenabschnitten der Fahartstrecke (F) angeben, empfängt.

26. Vorrichtung nach einem der Ansprüche 1-bis 25, **dadurch gekennzeichnet, daß** die Navigationseinrichtung (NAV) der Vorrichtung (1) eine GPS-Empfängereinrichtung ist.

27. Vorrichtung nach einem der Ansprüche 1 bis 26, **dadurch gekennzeichnet, daß** die Vorrichtung (1) weiterhin mindestens eine Fahrzeugkomponente (FK) aufweist, die mithilfe der Verarbeitungseinheit (2) gesteuert wird.

28. Vorrichtung nach einem der Ansprüche 1 bis 27, **dadurch gekennzeichnet, daß** die Vorrichtung (1) weiterhin eine Steuereinheit (5) aufweist, die an die Verarbeitungseinheit (2) angeschlossen ist und die die mindestens eine Fahrzeugkomponente (FK) steuert.

29. Vorrichtung nach Anspruch 28, **dadurch gekennzeichnet, daß** die Verarbeitungseinheit (2) Prognosedaten (PD) errechnet und an mindestens eine Fahrzeugkomponente (FK) oder an eine Steuereinheit (5), die mindestens eine Fahrzeugkomponente (FK) steuert, übermittelt.

30. Vorrichtung nach einem der Ansprüche 1 bis 29, **dadurch gekennzeichnet, daß** die Verarbeitungseinheit (2) auf der errechneten Prognose (P) beruhende Steuersignale (S) ausgibt, wobei die Steuersignale (S) elektrische, pneumatische oder optische Steuersignale sind.

31. Vorrichtung nach einem der Ansprüche 1 bis 30, **dadurch gekennzeichnet, daß** die Verarbeitungseinheit (2) auf der errechneten Prognose (P) beruhende Steuersignale (S) ausgibt.

32. Vorrichtung nach einem der Ansprüche 1 bis 31, **dadurch gekennzeichnet, daß** die Verarbeitungseinheit (2) den Luftdruck eines an die Verarbeitungseinheit (2) angeschlossenen Druckluftsystems (D) steuert oder regelt.

33. Vorrichtung nach einem der Ansprüche 1 bis 32, **dadurch gekennzeichnet, daß** die technische Ausnutzung von Schubbetriebsphasen (SP) in der Weise durchgeführt wird, daß während jeder technisch ausgenutzten Schubbetriebsphase (SP) in mindestens einer Fahrzeugkomponente (FK) zumindest kurzeitig Energie aus dem Schubbetrieb gewonnen und/oder gespeichert wird oder der Energieverbrauch der Fahrzeugkomponente (FK) zumindest vorübergehend mithilfe des Schubbetriebs gesenkt wird.

34. Vorrichtung nach einem der Ansprüche 1 bis 33, **dadurch gekennzeichnet, daß** die Fahrzeugkomponente (FK) ein Druckluftsystem (D) oder eine Komponente eines Druckluftsystems (D), ein Bremssystem (B) oder eine Komponente einer Bremssystems (B), eine Lichtmaschine (LM) oder ein Generator ist.

35. Fahrzeugkomponente (FK) eines Fahrzeugs (20) oder für ein Fahrzeug (20), **dadurch gekennzeichnet, daß** die Fahrzeugkomponente (FK) eine Vorrichtung (1) nach einem der Ansprüche 1 bis 34 aufweist.

## Claims

1. A device (1) for identifying in advance overrun condition phases (SP) of a vehicle (20), wherein the device (1) has at least one processing unit (2) which processes altitude position data (HD) of a section of road (F) which is being traveled on or is still to be traveled on by the vehicle (20), and calculates a prediction (P) about the expected occurrence of future overrun condition phases (SP) of the vehicle (20) taking into account the altitude position data (HD), **characterized in that** the processing unit (2) compares the duration (Td) of overrun condition phases (SP) which are expected to occur with a predefined minimum duration (Tmin) and calculates a prediction (P) which brings about selective utilization exclusively of overrun condition phases (SP; PSn) which have already started or which are imminent and whose calculated duration (Td) is longer than the predefined minimum duration (Tmin).

2. The device as claimed in claim 1, **characterized in that** the processing unit (2) calculates a prediction (P) which indicates in each case the occurrence of determined future overrun condition phases (SP) along a part (SA), lying ahead, of the section of road (F).

3. The device as claimed in claim 1 or 2, **characterized in that** the processing unit (2) calculates in advance the prediction (P) for in each case, one part (SA) of the section of road with a predefined length (L), which part (SA) of the section of road lies in each case directly ahead of the vehicle (20) during the journey along the section of road (F), in each case directly along the section of road (F).

4. The device as claimed in one of claims 1 to 3, **characterized in that** the processing unit (2) calculates a prediction (P) which indicates whether and/or where overrun condition phases (SP; SPn) will or will not occur on a section of road (F) lying ahead or on a part (SA), lying ahead, of the section of road.

5. The device as claimed in one of claims 1 to 4, **characterized in that** the calculated prediction (P) contains indications (A) about the time of the start (ta), about the time of the end (tb) and/or about the chronological duration (Td) of one or more cases of overrun condition phases (SP; SPn) which are expected to be imminent .

6. The device as claimed in one of claims 1 to 5, **characterized in that** the processing unit (2) calculates, from the altitude position data (HD) and from a direction of travel (R) of the vehicle (20) along the section of road (F), where in each case a negative gradient (G) will occur in the direction of travel (R) on the section of road (F) or on a part (SA), lying directly ahead, of the section of road.

7. The device as claimed in one of claims 1 to 6, **characterized in that** the device (1) stores, as a predefined minimum duration (Tmin) for overrun condition phases (SP) which are to be utilized technically, a fixed limiting value or a limiting value which is dependent on vehicle parameters (p), in a memory unit (MEM).

8. The device as claimed in one of claims 1 to 7, **characterized in that** the processing unit (2) compares the length (L) of sections of road (GS) with a negative gradient lying ahead with a predefined minimum length (Lmin) and outputs prediction data (PD) which permits targeted utilization of overrun condition phases (SP; PSn) on only those sections of road (GS) with a negative gradient whose length (L) exceeds the predefined minimum length (Lmin).

9. The device as claimed in one of claims 1 to 8, **characterized in that** the processing unit (2) calculates in each case for an instantaneous overrun condition phase (SP0) a prediction (P) about the expected remaining chronological duration (T0) of this overrun condition phase (SP0).

10. The device as claimed in claim 9, **characterized in that** the processing unit (2) generates in each case a control signal (S) for an instantaneous overrun condition phase (SP0), which control signal (S) defines, as a function of the expected remaining chronological duration (T0) of this overrun condition phase (SP0), whether or not technical utilization of this overrun condition phase (SP0) is to be brought about in at least one vehicle component (FK).

11. The device as claimed in claim 10, **characterized in that** the processing unit (2) generates in each case a control signal (S) for an instantaneous condition phase (SP0) which has already occurred, which control signal (S) then brings about technical utilization of this overrun condition phase (SP0) in at least one vehicle component (FK) when the expected, remaining chronological duration (T0) of the instantaneous overrun condition phase (SP0) exceeds a predefined limiting value (Tmin).

12. The device as claimed in one of claims 1 to 11, **characterized in that** the processing unit (2) calculates in each case for one and/or more future overrun condition phases (SPn) a prediction (P) about the expected chronological duration (Tn) of this overrun condition phase (SPn).

13. The device as claimed in one of claims 1 to 12, **characterized in that** the processing unit (2) generates in each case for one or more future overrun condition phases (SPn) a control signal (S) which, as a function of the expected chronological duration (Tn) of these overrun condition phases (SPn), defines in each case whether or not technical utilization of the respective overrun condition phase (SPn) is brought about in at least one vehicle component (FK).

14. The device as claimed in claim 13, **characterized in that** the processing unit (2) generates in each case for future overrun condition phases (SPn) which have been identified in advance a control signal (S) which, if the expected chronological duration (Tn) of the respective overrun condition phase (SPn) exceeds a predefined limiting value (Tmin), brings about technical utilization of this overrun condition phase in the at least one vehicle component (FK).

15. The device as claimed in one of claims 1 to 14, **characterized in that** the processing unit (2) calculates a chronological interval (TV) up to the start of an earliest future overrun condition phase (SPn) whose duration (Tn) is expected to exceed a predefined minimum duration (Tmin).

16. The device as claimed in claim 15, **characterized in that**, for instantaneous and/or future overrun condition phases (SP) whose chronological duration is expected in each case to be shorter than the predefined chronological minimum duration (Tmin) and which precede the calculated earliest future overrun condition phase (SP) with a longer duration than the predefined minimum duration (Tmin), the processing unit (2) prevents technical utilization of these preceding overrun condition phases for vehicle components.

17. The device as claimed in one of claims 1 to 16, **characterized in that** the device (1) uses the processing unit (2) to control the operation of at least one vehicle component (FK).

18. The device as claimed in one of claims 1 to 17, **characterized in that**, in order to calculate overrun condition phases (SP) in advance, the processing unit (2) also calculates the prediction (P) about the expected occurrence of future overrun condition phases (SP) of the vehicle as a function of location coordinates (OK) which indicate a geographic location (x, y; L) of the vehicle (20) along the section of road (F).

19. The device as claimed in one of claims 1 to 18, **characterized in that** the processing unit (2) continues, for the purpose of calculation of overrun condition phases (SP) in advance, to process current vehicle parameters (p), wherein the current vehicle parameters (P) comprise at least one element composed of altitude position data (HD) and/or location coordinates (OK) of the vehicle, of the vehicle speed, wheel speeds and/or yaw rates, of a vehicle acceleration, of a compressed air level of a brake system, of a humidity level of a compressed air vessel or of a compressed air-conditioning cartridge, of an engine speed, of the absolute value and/or of the sign of an engine torque, clutch data and/or gearspeed data, retarder data of the vehicle and of a distance from another vehicle traveling ahead.

20. The device as claimed in one of claims 1 to 19, **characterized in that** the location data (OK) which are processed by the processing unit (2) each indicate the instantaneous position of the traveling vehicle (20) along the section of road (F).

21. The device as claimed in claim 20, **characterized in that** the device (1) also comprises a navigation device (NAV) which receives location coordinates (OK) which each indicate an instantaneous position of the vehicle (20) along the section of road (20), and passes said location coordinates (OK) onto the processing unit (2).

22. The device as claimed in one of claims 1 to 21, **characterized in that** the device (1), the navigation device (NAV) thereof or the processing unit (2) thereof has a memory unit (MEM) in which the altitude position data (HD) of the section of road (20) are stored.

23. The device as claimed in one of claims 1 to 22, **characterized in that** the navigation device (NAV) receives not only the location coordinates (OK) of the vehicle (20) but also the altitude position data (HD) of the section of road (F) and passes them onto the processing unit (2).

24. The device as claimed in one of claims 1 to 23 **characterized in that** the altitude position data (HD) are vertical position coordinates (z) of points on or parts of the section of road (F).

25. The device as claimed in one of claims 1 to 24, **characterized in that** the navigation device (NAV) of the device (1) receives not only the coordination data (OK; x, y, L) of the vehicle but also altitude position data (HD) which indicate an instantaneous altitude position (z) of the vehicle, or from points or sections on the section of road (F) which are being instantaneously traveled along by the vehicle (20).

26. The device as claimed in one of claims 1 to 25, **characterized in that** the navigation device (NAV) of the device (1) is a GPS receiver device.

27. The device as claimed in one of claims 1 to 26, **characterized in that** the device (1) also has at least one vehicle component (FK) which is controlled by means of the processing unit (2).

28. The device as claimed in one of claims 1 to 27, **characterized in that** the device (1) also has a control unit (5) which is connected to the processing unit (2) and which controls the at least one vehicle component (FK).

29. The device as claimed in claim 28, **characterized in that** the processing unit (2) calculates prediction data (PD) and transmits said data to at least one vehicle component (FK) or to a control unit (5) which controls at least one vehicle component (FK).

30. The device as claimed in one of claims 1 to 29, **characterized in that** the processing unit (2) outputs control signals (S) which are based on the calculated prediction (P), wherein the control signals (S) are electrical, pneumatic or optical control signals.

31. The device as claimed in one of claims 1 to 30, **characterized in that** the processing unit (2) outputs control signals (S) which are based on the calculated prediction (P).

32. The device as claimed in one of claims 1 to 31, **characterized in that** the processing unit (2) performs open-loop or closed-loop control of the air pressure of a compressed air system (D) which is connected to the processing unit (2).

33. The device as claimed in one of claims 1 to 32, **characterized in that** the technical utilization of overrun condition phases (SP) is carried out in such a way that during each technically utilized overrun condition phase (SP) energy is at least briefly acquired from the overrun conditions and/or stored in at least one vehicle component (FK), or the consumption of energy of the vehicle component (FK) is at least temporarily reduced by means of the overrun conditions.

34. The device as claimed in one of claims 1 to 33, **characterized in that** the vehicle component (FK) is a compressed air system (D) or a component of a compressed air system (D), a brake system (B) or a component of a brake system (B), a dynamo (LM) or a generator.

35. A vehicle component (FK) of a vehicle (20) or for a vehicle (20), **characterized in that** the vehicle component (FK) has a device (1) as claimed in one of claims 1 to 34.

## Revendications

1. Dispositif (1) d'identification à l'avance de phases (SP) de roulement sur la lancée d'un véhicule (20), le dispositif (1) ayant au moins une unité (2) de traitement, qui traite des données (HD) de position en hauteur d'un parcours (F) parcouru ou à parcourir encore par le véhicule (20) et en tenant compte des données (HD) de position en hauteur, calcule un pronostic (P) sur la présence prévisible de phases (SP) à venir de roulement sur la lancée du véhicule (20), **caractérisé en ce que** l'unité (2) de traitement compare la durée (Td) de phases (SP) de roulement sur la lancée prévisibles à une durée (Tmin) minimum prescrite et calcule un pronostic (P), qui provoque une mise à profit ciblée exclusivement des phases (SP; PSn) de roulement sur la lancée déjà commencées ou imminentes, dont la durée (Td) calculée est plus grande que la durée (Tmin) minimum prescrite.

2. Dispositif suivant la revendication 1, **caractérisé en ce que** l'unité (2) de traitement calcule un pronostic (P), qui indique la présence de phases (SP) déterminées à venir de roulement sur la lancée respectivement le long d'un tronçon (SA) en aval du parcours (F).

3. Dispositif suivant la revendication 1 ou 2, **caractérisé en ce que** l'unité (2) de traitement calcule à l'avance le pronostic (P) respectivement pour un tronçon (SA) de parcours de longueur (L) prescrite, qui est respectivement directement en aval du véhicule (20) pendant le trajet le long du parcours (F).

4. Dispositif suivant l'une des revendications 1 à 3, **caractérisé en ce que** l'unité (2) de traitement calcule un pronostic (P), qui indique, si et/ou où, sur un parcours (F) en aval ou sur un tronçon (SA) de parcours en aval du parcours, des phases (SP; SPn) de roulement sur la lancée auront lieu ou n'auront pas lieu.

5. Dispositif suivant l'une des revendications 1 à 4, **caractérisé en ce que** le pronostic (P) calculé comporte des indications (A) sur l'instant du début (ta), sur l'instant de la fin (tb) et/ou sur la durée (Td) d'une ou de plusieurs phases (SP; SPn) imminentes et prévisibles de roulement sur la lancée.

6. Dispositif suivant l'une des revendications 1 à 5, **caractérisé en ce que** l'unité (2) de traitement calcule, à partir des données (HD) de position en hauteur et d'un sens (R) de marche du véhicule (20) le long du parcours (F), où se produira sur le parcours (F) ou sur un tronçon (SA) du parcours directement en aval, respectivement, une pente (G) dans le sens (R) de marche.

7. Dispositif suivant l'une des revendications 1 à 6, **caractérisé en ce que** le dispositif (1) mémorise, dans une unité (MEM) de mémorisation, comme durée (Tmin) minimum prescrite pour des phases (SP) de roulement sur la lancée à mettre à profit techniquement, une valeur limite fixe ou qui dépend de paramètres (p) du véhicule.

8. Dispositif suivant l'une des revendications 1 à 6, **caractérisé en ce que** l'unité (2) de traitement compare la longueur (L) de section (GS) en pente en aval à une longueur (Lmin) minimum prescrite et émet des données (PD) de pronostic, qui rendent possible une mise à profit ciblée de phases (SP; PSn) de roulement sur la lancée, seulement sur les sections (GS) en pente, dont la longueur (L) dépasse la longueur (Lmin) minimum prescrite.

9. Dispositif suivant l'une des revendications 1 à 8, **caractérisé en ce que** l'unité (2) de traitement calcule, respectivement pour une phase (SPO) prescrite de roulement sur la lancée, un pronostic (P) sur la durée (T0) prévisible restante de cette phase (SPO) de roulement sur la lancée.

10. Dispositif suivant la revendication 9, **caractérisé en ce que** l'unité (2) de traitement produit, respectivement pour une phase (SPO) prescrite de roulement sur la lancée, un signal (S) de commande, qui fixe, en fonction de la durée (T0) restante de manière prévisible de cette phase (SPO) de roulement sur la lancée, si une mise à profit technique de cette phase (SPO) de roulement sur la lancée est faite dans au moins un composant (FK) du véhicule ou ne l'est pas.

11. Dispositif suivant la revendication 10, **caractérisé en ce que** l'unité (2) de traitement produit respectivement pour une phase (SPO) prescrite et qui s'est déjà produite de roulement sur la lancée, un signal (S) de commande qui, si la durée (T0) restante d'une manière prévisible de la phase (SP0) prescrite de roulement sur la lancée dépasse une valeur (Tmin) limite définie à l'avance, provoque une mise à profit technique de cette phase (SP0) de roulement sur la lancée dans au moins un composant (FK) du véhicule.

12. Dispositif suivant l'une des revendications 1 à 11, **caractérisé en ce que** l'unité (2) de traitement calcule, respectivement pour une ou plusieurs phases (SPn) à venir de roulement sur la lancée, un pronostic (P) sur la durée (Tn) prévisible qui s'ensuit de ces phases (SPn) de roulement sur la lancée.

13. Dispositif suivant l'une des revendications 1 à 12, **caractérisé en ce que** l'unité (2) de traitement produit, respectivement pour une ou pour plusieurs phases (SPn) à venir de roulement sur la lancée, un signal (S) de commande qui fixe, en fonction de la durée (Tn) prévisible de ces phases (SPn) de roulement sur la lancée, si une mise à profit technique des phases (SPn) respectives de roulement sur la lancée est faite dans au moins un composant (FK) du véhicule ou ne l'est pas.

14. Dispositif suivant la revendication 13, **caractérisé en ce que** l'unité (2) de traitement produit, respectivement pour des phases (SPn) à venir identifiées à l'avance de roulement sur la lancée, un signal (S) de commande qui, si la durée (Tn) prévisible des phases (SPn) respectives de roulement sur la lancée dépasse une valeur (Tmin) limite définie à l'avance, provoque une mise à profit technique de cette phase de roulement sur la lancée dans le au moins un composant (FK) du véhicule.

15. Dispositif suivant l'une des revendications 1 à 14, **caractérisé en ce que** l'unité (2) de traitement calcule un intervalle (TV) de temps allant jusqu'au début d'une phase (SPn) à venir la plus tôt de roulement sur la lancée, dont la durée dépassera de manière prévisible une durée (Tmin) minimum définie à l'avance.

16. Dispositif suivant la revendication 15, **caractérisé en ce que** l'unité (2) de traitement supprime, pour des phases (SP) prescrites et/ou à venir de roulement sur la lancée, dont la durée est respectivement d'une manière prévisible plus petite que la durée (Tmin) minimum définie à l'avance et qui précèdent la phase (SP) à venir calculée la plus tôt de roulement sur la lancée de durée plus grande que la durée (Tmin) minimum définie à l'avance, une mise à profit technique de ces phases précédentes de roulement sur la lancée pour des composants du véhicule.

17. Dispositif suivant l'une des revendications 1 à 16, **caractérisé en ce que** le dispositif (1) commande le fonctionnement d'au moins un composant (FK) du véhicule à l'aide de l'unité (2) de traitement.

18. Dispositif suivant l'une des revendications 1 à 17, **caractérisé en ce que** l'unité (2) de traitement calcule, pour le calcul préalable de phases (SP) de roulement sur la lancée, le pronostic (P) sur la présence prévisible de phases (SP) à venir de roulement sur la lancée du véhicule, en outre, en fonction de coordonnées (OK) dans l'espace, qui indiquent une position (x, y; L) géographique du véhicule (20) le long du parcours (F).

19. Procédé suivant l'une des revendications 1 à 18, **caractérisé en ce que** l'unité (2) de traitement traite, pour le calcul préalable de phases (SP) de roulement sur la lancée, en outre, des paramètres (P) instantanés du véhicule, les paramètres (P) instantanés du véhicule comprenant au moins un élément composé de données (HD) de position en hauteur et/ou de coordonnées (OK) locales du véhicule, de la vitesse du véhicule, des vitesses de roue et/ou de taux de lacet, d'une accélération du véhicule, d'un niveau de pression d'air d'un système de frein, d'un niveau d'humidité d'un réservoir d'air comprimé ou d'une cartouche de traitement d'air comprimé, d'un régime du moteur, de la valeur absolue et/ou du signe d'un couple de rotation du moteur, de données d'embrayage et/ou de rapports de vitesse, de données de ralentisseur du véhicule et d'une distance à un autre véhicule précédent.

20. Procédé suivant l'une des revendications 1 à 19, **caractérisé en ce que** les coordonnées (OK) dans l'espace traitées par l'unité (2) de traitement indiquent respectivement la position présente du véhicule (20) en circulation le long du parcours (F).

21. Procédé suivant la revendication 20, **caractérisé en ce que** le dispositif (1) comprend, en outre, un dispositif (NAV) de navigation, qui reçoit et achemine à l'unité (2) de traitement des coordonnées (OK) dans l'espace, qui indiquent respectivement une position présente du véhicule (20) le long du parcours (F).

22. Procédé suivant l'une des revendications 1 à 21, **caractérisé en ce que** le dispositif (1), son dispositif (NAV) de navigation ou son unité (2) de traitement comporte une unité (MEM) de mémorisation, dans laquelle les données (HD) de position en hauteur du parcours (F) sont mémorisées.

23. Procédé suivant l'une des revendications 1 à 22, **caractérisé en ce que** le dispositif (NAV) de navigation reçoit, outre les coordonnées (OK) dans l'espace du véhicule (20), également les données (HD) de position en hauteur du parcours (F) et les achemine à l'unité (2) de traitement.

24. Procédé suivant l'une des revendications 1 à 23, **caractérisé en ce que** les données (HD) de position en hauteur ont des coordonnées (Z) de position verticale de points ou de tronçons du parcours (F).

25. Procédé suivant l'une des revendications 1 à 24, **caractérisé en ce que** le dispositif (NAV) de navigation du dispositif (1) reçoit, outre les coordonnées (OK; x, y, L) dans l'espace du véhicule, également des données (HD) de position en hauteur, qui indiquent une position (z) en hauteur présente du véhicule ou des points ou des tronçons du parcours (F) parcourus présentement par le véhicule (20).

26. Procédé suivant l'une des revendications 1 à 25, **caractérisé en ce que** le dispositif (NAV) de navigation du dispositif (1) est un dispositif à récepteur GPS.

27. Procédé suivant l'une des revendications 1 à 26, **caractérisé en ce que** le dispositif (1) comporte, en outre, au moins un composant (FK) de véhicule, qui est commandé à l'aide de l'unité (2) de traitement.

28. Procédé suivant l'une des revendications 1 à 27, **caractérisé en ce que** le dispositif (1) comporte, en outre, une unité (5) de commande, qui est raccordée à l'unité (2) de traitement et qui commande le au moins un composant (FK) du véhicule.

29. Procédé suivant la revendication 28, **caractérisé en ce que** l'unité (2) de traitement calcule des données (PD) de pronostic et les transmet à au moins un composant (FK) du véhicule ou à une unité (5) de commande, qui commande au moins un composant (FK) du véhicule.

30. Procédé suivant l'une des revendications 1 à 29, **caractérisé en ce que** l'unité (2) de traitement émet des signaux de commande reposant sur les pronostics (P) calculés, les signaux (S) de commande étant des signaux de commande électriques, pneumatiques ou optiques.

31. Procédé suivant l'une des revendications 1 à 30, **caractérisé en ce que** l'unité (2) de traitement émet des signaux (S) de commande reposant sur les pronostics (P) calculés.

32. Procédé suivant l'une des revendications 1 à 31, **caractérisé en ce que** l'unité (2) de traitement commande ou règle la pression de l'air d'un système (D) d'air comprimé raccordé à l'unité (2) de traitement.

33. Procédé suivant l'une des revendications 1 à 32, **caractérisé en ce que** la mise à profit technique des phases (SP) de roulement sur la lancée est réalisée de manière à ce que, pendant chaque phase (SP) de roulement sur la lancée mise à profit techniquement, de l'énergie est au moins brièvement récupérée à partir du roulement sur la lancée et/ou accumulée dans au moins un composant (FK) du véhicule ou la consommation d'énergie du composant (FK) du véhicule est abaissée, au moins temporairement, à l'aide du roulement sur la lancée.

34. Procédé suivant l'une des revendications 1 à 33, **caractérisé en ce que** le composant (FK) du véhicule est un système (D) d'air comprimé ou un composant d'un système (D) d'air comprimé, un système (B) de freinage ou un composant d'un système (B) de freinage, une dynamo (LM) d'éclairage ou une génératrice.

35. Composant (FK) d'un véhicule (20) ou pour un véhicule (20), **caractérisé en ce que** le composant (FK) de véhicule comporte un dispositif (1) suivant l'une des revendications 1 à 34.
